# EUROPÄISCHE PATENTSCHRIFT

(11) **EP 2 259 952 B1**
(45) Veröffentlichungstag und Bekanntmachung des Hinweises auf die Patenterteilung: **09.11.2011**
(21) Anmeldenummer: 09709149.0
(22) Anmeldetag: 27.01.2009
(51) Int. Cl.: B60R 25/02

(54) **VORRICHTUNG ZUR ANSTEUERUNG EINES SPERRGLIEDES**
DEVICE FOR CONTROLLING A BLOCKING MEMBER
DISPOSITIF POUR COMMANDER UN ÉLÉMENT DE BLOCAGE

(30) Priorität: 05.02.2008 DE 102008007741
(43) Veröffentlichungstag der Anmeldung: 15.12.2010
(73) Patentinhaber: Huf Hülsbeck & Fürst GmbH & Co. KG, 42551 Velbert (DE)
(72) Erfinder: PAULSEN, Waldemar, 58256 Ennepetal (DE)
(74) Vertreter: Vogel, Andreas
(86) Internationale Anmeldenummer: PCT/EP2009/050864
(87) Internationale Veröffentlichungsnummer: WO 2009/098140

(56) Entgegenhaltungen:
- EP-A- 1 564 091
- DE-C1- 3 227 256
- US-A1- 2004 069 027

## Beschreibung

Die Erfindung betrifft eine Vorrichtung zur Ansteuerung eines Sperrgliedes eines funktionswesentlichen Bauteiles, insbesondere einer Lenksäule oder eines Gangschalthebels eines Kraftfahrzeuges, mit einem Getriebe, das einen Rotationskörper mit einer Steuerkontur aufweist, mit der das Sperrglied in mechanischer Wirkverbindung steht, das in eine Verriegelungslage und in eine Entriegelungslage und umgekehrt bewegbar ist, wobei in der Verriegelungslage das Sperrglied am funktionswesentlichen Bauteil eingreift, in der Entriegelungslage das Sperrglied losgelöst vom funktionswesentlichen Bauteil ist.

Derartige Vorrichtungen zum Ansteuern eines Sperrgliedes eines funktionswesentlichen Bauteiles sind insbesondere aus dem Kraftfahrzeugbereich bekannt und werden dort erfolgreich als Sicherungseinrichtungen eingesetzt, die eine Funktion eines Kraftfahrzeugbauteils verhindern, blockieren oder zumindest stark einschränken.

In der DE 103 56 660 B4 ist eine Vorrichtung zur Ansteuerung eines Sperrgliedes einer Lenksäule beschrieben. Die elektrische Lenkungsverriegelung weist ein hubbewegliches Sperrglied auf, das über ein Getriebe bewegt werden kann. Das Getriebe ist ein Kurvengetriebe, das aus einer um eine Achse drehbeweglichen Kurvenscheibe besteht, die durch einen Elektromotor angetrieben ist. Die Kurvenscheibe weist eine Spiralnut auf, die als Kulissenführung für das Sperrglied dient. Während das Getriebe aktiviert ist, insbesondere die Kurvenscheibe sich bewegt, erfolgt eine direkte Kraftübertragung auf das Sperrglied, das linear in die Verriegelungslage oder die Entriegelungslage bewegt wird. Es hat sich nachteiligerweise gezeigt, dass bei ungünstigen Bedingungen höhere Kräfte bei der Bewegung des Sperrgliedes in seine jeweilige Lage notwendig sind, da das Sperrglied beispielsweise durch ein von außen wirkendes statisches Lastmoment in der Verriegelungslage eingeklemmt sein kann, z. B. durch gegen einen Bordstein eingeschlagene Fahrzeugräder, wodurch die Funktionsweise der im Stand der Technik bekannten Lenkungsverriegelungen gestört werden kann.

Eine Vorrichtung mit den Merkmalen des Oberbegriffs des Anspruchs 1 ist aus der EP-A-1 564 091 bekannt.

Es ist Aufgabe der vorliegenden Erfindung, eine gattungsgemäße Vorrichtung zur Ansteuerung eines Sperrgliedes zu schaffen, bei der die oben genannten Nachteile vermieden werden, insbesondere das Sperrglied in jeder Situation zuverlässig in seine jeweilige Lage bewegt werden kann.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Erfindungsgemäß ist vorgesehen, dass zwischen dem Rotationskörper und dem Sperrglied eine schwenkbare, mehrteilige Hebelanordnung angeordnet ist, die über ein Zwischenelement an der Steuerkontur derart zwangsgeführt ist, dass während der Bewegung des Sperrgliedes in seine jeweilige Lage das Zwischenelement sich auf einer bogenförmigen Kurve verschiebt, wodurch hohe Kräfte auf das Sperrglied einbringbar sind. Das Sperrglied ist mit der Hebelanordnung gekoppelt, auf die im aktivierten Zustand des Getriebes die Steuerkontur wirkt, wodurch die Hebelanordnung mit dem Zwischenelement eine bogenförmige Bewegung erfährt. Gleichzeitig entsteht durch das Zusammenspiel von Rotationskörper mit der Steuerkontur und daran geführten Hebelanordnung eine Kraftverstärkung am Sperrglied, so dass beispielsweise am Bewegungsanfang des Sperrgliedes von seiner Verriegelungslage in die Entriegelungslage große Kräfte erzeugt werden können. Etwaige auf das Sperrglied wirkende Lastmomente können beim Entriegelungsvorgang problemlos überwunden werden, da die auf das Sperrglied wirkenden Auszugskräfte entsprechend groß sind. Neben dem großen mechanischen Wirkungsgrad des Getriebes können hohe Verstellgeschwindigkeiten für das Sperrglied während der Bewegung in seine jeweilige Lage bewirkt werden. Mittels des Getriebes können Verstellzeiten des Sperrgliedes von der Verriegelungslage in die Entriegelungslage und umgekehrt von 200 Millisekunden oder kleiner erreicht werden, wobei gleichzeitig die erfindungsgemäße Vorrichtung sich durch ihren kompakten Aufbau auszeichnet und somit nur einen kleinen Einbauraum innerhalb des Kraftfahrzeuges benötigt. Über die Führung des Zwischenelementes an der Steuerkontur, wird wirkungsvoll eine Drehbewegung des Rotationskörpers in eine Hubbewegung des Sperrgliedes umgewandelt, ohne große Geräuschentwicklungen entstehen zu lassen.

In einer möglichen Ausführungsvariante ist die Hebelanordnung als Kniehebelkonstruktion ausgeführt, durch die während des aktivierten Getriebes eine Kraftverstärkung auf das Sperrglied gezielt erreicht werden kann, wobei insbesondere bei der Bewegung des Sperrgliedes von der Verriegelungslage in die Entriegelungslage eine Auszugskraft von 100 bis 300 N bewirkt werden kann. Bei dieser Ausführungsvariante kann die Hebelanordnung einen ersten und einen zweiten Hebel aufweisen, wobei der erste Hebel an einer festen Lagerstelle drehbar gelagert ist und der zweite Hebel gelenkartig mit dem ersten Hebel verbunden ist und an seinem freien Ende auf das Sperrglied wirkt. Der zweite Hebel ist ferner an seinem freien Ende gelenkig am Sperrglied befestigt, so dass zwar die Hebelanordnung mit dem Zwischenelement sich entlang der bogenförmigen Kurve verschiebt, aber das Sperrglied lediglich eine lineare Hubbewegung ausführt.

Die Steuerkontur kann als Spiralnut ausgebildet sein, die als Kulissenführung für das Zwischenelement sowie für die schwenkbare Hebelanordnung wirkt. Das Zwischenelement kann hierbei als Bolzen ausgeführt sein, der zuverlässig während der Drehung des Rotationskörpers innerhalb der Steuerkontur verfährt und gleichzeitig mit der Hebelanordnung befestigt ist, so dass aus einer Drehbewegung des Rotationskörpers eine Hubbewegung des Sperrglieds wirksam erzielt werden kann. Vorteilhafterweise liegt das Zwischenelement am Gelenkpunkt des ersten und des zweiten Hebels.

In einer möglichen Ausführungsform kann der Rotationskörper als Scheibenelement ausgebildet sein, das mit einer Stirnfläche ausgeführt ist, auf der die Steuerkontur ausgebildet ist. Über die Geometrie der Steuerkontur ist die auf das Sperrglied wirkende Kraft unmittelbar beeinflussbar. Die Steuerkontur kann beispielsweise als archimedische oder logarithmische Spirale ausgeführt sein. Um keine Unstätigkeiten in der Bewegung der Hebelanordnung entlang der bogenförmigen Kurve entstehen zu lassen, kann der Radius der Spirale zur Drehachse des Rotationskörpers konstant mit dem Drehwinkel steigen. Von der Radiusdifferenz ist auch die Kraftverstärkung auf das Sperrglied abhängig. Vom Radius hängen aber auch gleichzeitig die Position des Angriffpunktes der Hebelanordnung ab und damit auch der Kraftverstärkungsfaktor des Getriebes sowie der Hubweg des Sperrgliedes.

Der Rotationskörper kann eine Antriebsseite und eine Abtriebsseite aufweisen, wobei ein Elektromotor an der Antriebsseite angreift und die Abtriebsseite mit der Hebelanordnung gekoppelt ist. Die Antriebsseite kann mit einer Verzahnung ausgebildet sein, auf die ein Schneckenrad oder ein Stirnrad angreift.

Der Rotationskörper kann in einer alternativen Ausführungsform mit einer Mantelfläche ausgebildet sein, auf der die Steuerkontur ausgebildet ist. Vorteilhafterweise bildet der Rotationskörper ein massives Bauteil in Form eines geraden Kreiszylinders, wobei die Steuerkontur als eine Art Gewinde an der Mantelfläche verläuft. Durch die Drehung des Rotationskörpers bewegt sich das Zwischenelement sowie die Hebelanordnung entlang der Mantelfläche und erfahren eine entsprechende bogenförmige Bewegung während das Sperrglied in seine entsprechende Lage überführt wird. Es hat sich vorteilhafterweise gezeigt, dass bei einer Kopplung der Hebelanordnung an der rotierenden Mantelfläche des Rotationskörpers weitere Einsparungen im Bauraum der Gesamtkonstruktion der erfindungsgemäßen Vorrichtung erzielbar sind.

Bei einer Ausführungsform der Erfindung weist die Steuerkontur eine aktive Zone und eine passive Zone auf, wodurch ein Freilauf des Getriebes erzielbar ist, bei dem das Sperrglied in seiner jeweiligen Lage verbleibt, während das Getriebe aktiviert ist, insbesondere der Rotationskörper sich bewegt. Somit können auch Motoren für die Ansteuerung des Sperrgliedes zum Einsatz kommen, die lediglich mit einer sehr einfachen Motorsteuerung arbeiten. Obwohl das Sperrglied seine Verriegelungslage oder Entriegelungslage längst erreicht hat, kann der Motor problemlos noch für eine gewisse Zeit im aktivierten Zustand sein, bei dem das Getriebe aktiv ist. Befindet sich das Zwischenelement in der aktiven Zone, erfolgt bei einer Drehbewegung des Rotationskörpers eine entsprechende Bewegung des Sperrgliedes in seine jeweilige Lage. Befindet sich das Zwischenelement in der passiven Zone der Steuerkontur, ist das Getriebe in einem Freilauf, beispielsweise in einem Vorlauf oder Nachlauf, bei dem die Hebelanordnung sowie das Sperrglied unbeweglich in ihrer Position verbleiben. Die aktive Zone und die passive Zone können sich beispielsweise in ihrer Geometrie dadurch unterscheiden, dass im Falle des Rotationskörpers, der als Scheibenelement ausgebildet ist, bei dem die Steuerkontur auf der Stirnfläche sich befindet, der Radius der Spiralnut zur Drehachse des Rotationskörpers in der passiven Zone konstant ist und in der aktiven Zone größer werdend oder kleiner werdend ist. Im Falle des Rotationskörpers, bei dem die Steuerkontur an der Mantelfläche sich befindet, weist die aktive Zone der Steuerkontur, insbesondere des Gewindes eine Steigung auf, wobei die passive Zone des Gewindes steigungslos ausgeführt ist.

Die erfindungsgemäße Vorrichtung kann als elektrische Lenkungsverriegelung für Fahrzeuge zum Einsatz kommen, wobei die Vorrichtung zu dem problemlos mit insbesondere so genannten "Keyless-Entry-Systemen" kombinierbar ist. Die erfindungsgemäße Vorrichtung kann von außen, beispielsweise per Funksignal oder nach einem stattgefundenen Datenaustausch aktiviert werden. Dabei ermöglicht die Erfindung selbstverständlich eine Rückmeldung dahingehend, ob die betreffende Vorrichtung zuverlässig das funktionswesentliche Bauteil, insbesondere die Lenksäule oder den Gangschalthebel des Kraftfahrzeuges, blockiert oder nicht. Dies kann z. B. durch eine optische oder akustische Meldevorrichtung innerhalb des Kraftfahrzeuges dargestellt werden.

Vorteilhafterweise wird die Vorrichtung zur Ansteuerung des Sperrgliedes durch eine Steuerelektronik überwacht, die fahrzeugseitig angeordnet sein kann. Aus sicherheitstechnischen Gründen kann es vorteilhaft sein, wenn neben der Erfassung des Drehweges oder Drehwinkels des Rotationskörpers auch bestimmte Positionen der Hebelanordnung, insbesondere des ersten und des zweiten Hebels sowie des Zwischenelementes oder des Sperrgliedes erfasst werden. Dies kann beispielsweise durch Sensoren, insbesondere Magnetfeldsensoren, erfolgen, die das magnetische Feld eines auf dem Rotationskörper, der Hebelanordnung oder dem Sperrglied angebrachten Permanentmagneten mittels eines Hallsensors erfassen. Die Positionsbestimmung kann alternativ auch über Lichtschranken erfolgen. Dadurch kann eine elektronische Steuerung die Funktionsfähigkeit der mechanischen Kopplung zwischen dem Rotationskörper und dem Sperrglied überwachen, sowie eine Manipulation erkennen.

In einer Ausführungsform der Erfindung sind das Sperrglied und/oder die Hebelanordnung aus einem Metall, insbesondere aus Stahl hergestellt. Die Materialdicke ist dabei so bemessen, dass weitestgehend eine Materialzerstörung ausgeschlossen werden kann. In einer alternativen Ausführungsform können die genannten Bauteile in Spritzgusstechnik hergestellt sein. Vorteilhafterweise ist das freie Ende des Sperrgliedes in seiner Kontur abgerundet und/oder angeschrägt ausgeführt, wodurch ein Einrasten des Sperrgliedes in eine Nut des funktionswesentlichen Bauteils erleichtert wird. In der Verriegelungslage des Sperrgliedes liegt ein Formschluss mit dem funktionswesentlichen Bauteil vor. Das funktionswesentliche Bauteil kann beispielsweise als Lenksäule ausgeführt sein, die mehrere Zahnlücken aufweist, in die das Sperrglied in der Verriegelungslage radial zur Lenksäule eingreift. Alternativ kann die Lenksäule derart ausgeführt sein, dass in der Verriegelungslage das Sperrglied tangential einen Formschluss zur Lenkssäule entstehen lässt.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine erfindungsgemäße Vorrichtung zur Ansteuerung eines Sperrgliedes einer Lenksäule, wobei das Sperrglied in einer Verriegelungslage sich befindet,
- Fig. 2: die Vorrichtung gemäß Fig. 1, wobei das Sperrglied in einer Entriegelungslage sich befindet,
- Fig.3: eine weitere Alternative einer Vorrichtung zur Ansteuerung eines Sperrgliedes einer Lenksäule, wobei das Sperrglied in einer Verriegelungslage sich befindet,
- Fig.4: die Vorrichtung gemäß Fig. 3, wobei das Sperrglied in einer Entriegelungslage sich befindet und
- Fig. 5: eine alternative Ausführungsform zur Vorrichtung gemäß Fig. 3 und Fig. 4.

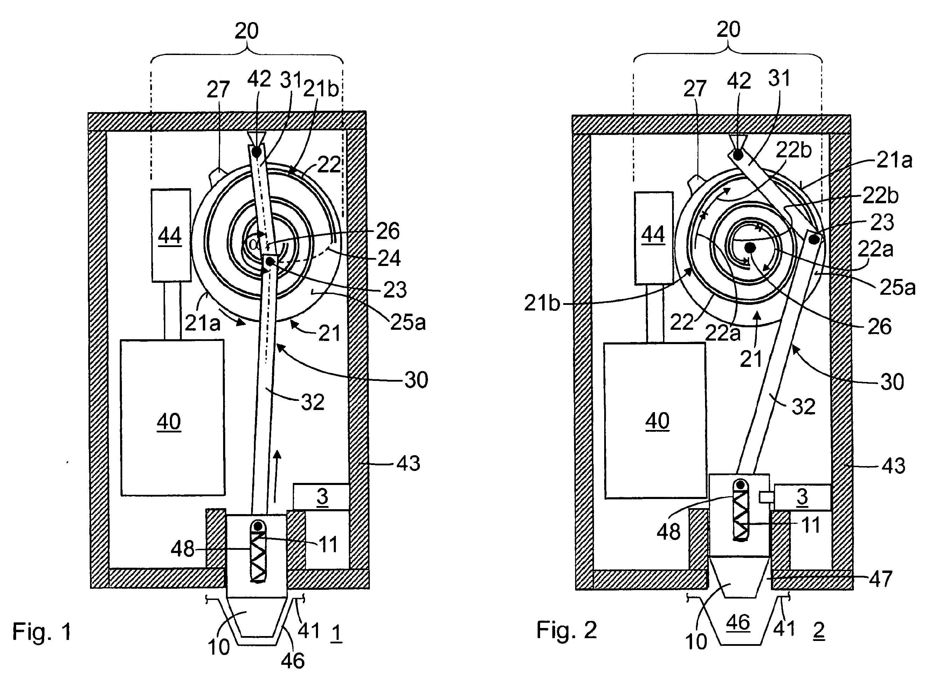

Die Fig. 1 und 2 zeigen rein schematisch eine erste mögliche Ausführungsform einer Vorrichtung zur Ansteuerung eines Sperrgliedes 10 eines funktionswesentlichen Bauteils 41 eines Kraftfahrzeuges. Bei dem Bauteil 41 handelt es sich um eine Lenksäule 41. Die Vorrichtung weist ein Getriebe 20 auf, das einen Rotationskörper 21 mit einer Steuerkontur 22 aufweist. Das Getriebe 20 ist mit dem Sperrglied 10 in mechanischer Wirkverbindung, das in eine Verriegelungslage 1, die in Fig. 1 gezeigt ist und in eine Entriegelungslage 2, die in Fig. 2 dargestellt ist, und umgekehrt bewegbar ist. In der Verriegelungslage 1 ragt das Sperrglied 10 mit seinem freien Ende aus dem Gehäuse 42 der Vorrichtung heraus und steht in einem Formschluss mit der Lenksäule 41. Im vorliegenden Ausführungsbeispiel befindet sich das freie Ende des Sperrgliedes 10 in einer Nut 46 der Lenksäule 41, wodurch die Lenksäule 41 gesperrt ist. Im Gegensatz dazu ist das Sperrglied 10 in der Entriegelungslage 2 losgelöst von der Lenksäule 41. Der Rotationskörper 21 ist um eine Achse 26 drehbar gelagert. Zwischen dem Rotationskörper 21 und dem Sperrglied 10 ist eine Hebelanordnung 30 angeordnet, die schwenkbar und mehrteilig ausgeführt ist. Die Hebelanordnung 30 weist einen ersten 31 und einen zweiten Hebel 32 auf. Der erste Hebel 31, der gemäß dem vorliegenden Ausführungsbeispiel in seiner Länge kürzer ausgeführt ist als der zweite Hebel 32, ist an einer Lagerstelle 42, die fest am Gehäuse 43 sich befindet, schwenkbar gelagert. An der der Lagerstelle 42 gegenüberliegenden Seite ist der erste Hebel 31 über ein Gelenk mit dem zweiten Hebel 32 verbunden. Am freien Ende, das dem ersten Hebel 31 abgewandt ist, ist der zweite Hebel 32 gelenkartig mit dem Sperrglied 10 verbunden.

Die Hebelanordnung 30 ist über ein Zwischenelement 32, das im vorliegenden Ausführungsbeispiel gleichzeitig das Gelenkelement des ersten und des zweiten Hebels 31, 32 bildet, an der Steuerkontur 22 zwangsgeführt. Der Rotationskörper 21 weist eine Antriebsseite 21a und eine Abtriebsseite 21 b auf. Über einen Elektromotor 40 und einem Schneckenrad 44 wird die Antriebsseite 21 a des Rotationskörpers 21 angetrieben. Die Steuerkontur 22, die die Abtriebsseite 21 b des Rotationskörpers 21 darstellt, ist als archimedische Spirale ausgeführt. Während der Motor 40 den Rotationskörper 21, der ein Scheibenelement ist, in Rotation bringt, wandelt das Getriebe 20 die vorliegende Rotationsbewegung in eine Hubbewegung um, wobei gleichzeitig eine Verstärkung der auf das Sperrglied 10 wirkenden Kraft über die Kniehebelkonstruktion erfolgt.

Ausgehend von der Verriegelungslage 1 gemäß Fig. 1, in der das Sperrglied 10 aus der Öffnung 47 des Gehäuses 43 herausragt und die Lenksäule 41 blockiert, erfolgt beim Entriegelungsvorgang eine Bewegung des Rotationskörpers 21 gegen den Uhrzeigersinn. Das Zwischenelement 32 gleitet an der Stirnfläche 25a des Rotationskörpers 21 innerhalb der Steuerkontur 22 ab und gelangt in die Position gemäß Fig. 2. Während dieses Entriegelungsvorganges führt das Zwischenelement 32 eine Bewegung entlang der bogenförmigen Kurve 24 aus. Gleichzeitig werden hohe Auszugskräfte über die Hebelanordnung 30 auf das Sperrglied 10 ausgeübt, das translatorisch sich in das Gehäuseinnere der Vorrichtung bewegt und seine Entriegelungslage 2 erreicht.

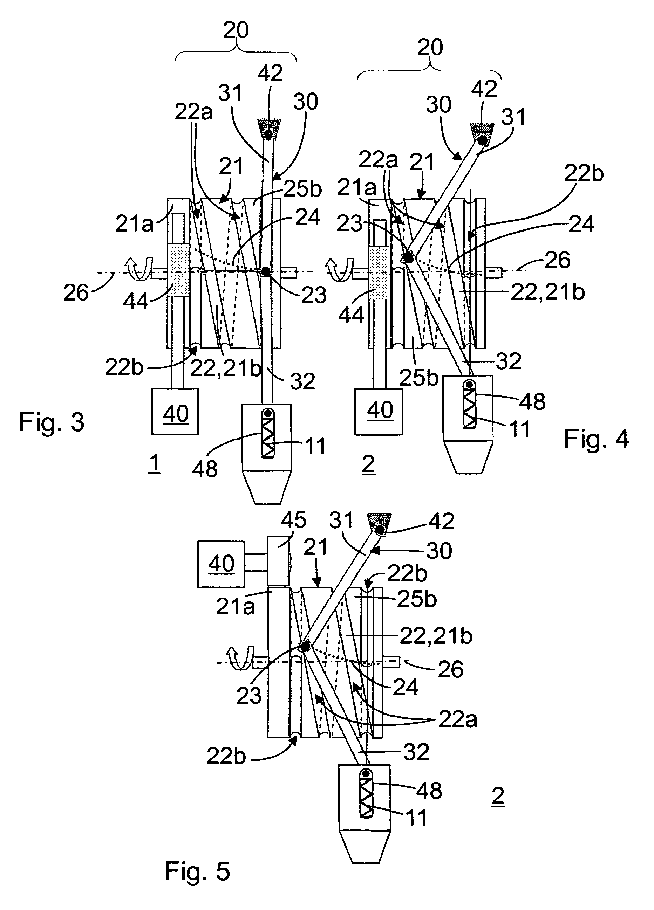

In den Ausführungsbeispielen gemäß Fig. 3 bis Fig. 5 weist das Getriebe 20 ebenfalls einen Rotationskörper 21 mit einer Steuerkontur 22 auf, in der ein Zwischenelement 32 zwangsgeführt ist, wodurch die Hebelanordnung 30 eine dem Ausführungsbeispiel gemäß Fig. 1 entsprechende Kraft auf das Sperrglied 10 während der Bewegung in seine jeweilige Lage 1 und 2 ausübt. Um Wiederholungen zu vermeiden wird im Folgenden kurz auf den wesentlichen Unterschied eingegangen: Im Gegensatz zum ersten Ausführungsbeispiel ist der Rotationskörper 21 mit einer Mantelfläche 25b ausgebildet, auf der die Steuerkontur 22 sich befindet. Die Steuerkontur 22 verläuft gewindeartig an der Mantelfläche 25b. Während der Rotationskörper 21 angetrieben durch den Motor 40 um die Achse 26 in Rotation gebracht wird, erfolgt eine Zwangsführung des Zwischenelementes 23 an der Steuerkontur 22, wodurch ausgehend von Fig. 3 das Sperrglied 10 von der Verriegelungslage 1 in die Entriegelungslage 2 gemäß Fig. 4 gebracht wird. Hierbei erfolgt ebenfalls eine Bewegung des Zwischenelementes 23 sowie der Hebelanordnung 30 auf einer bogenförmigen Kurve 24.

Auch in Fig. 3 und Fig. 4 wird die Antriebsseite 21 a des Rotationskörpers 21 über ein Schneckenrad 44 angetrieben. Alternativ ist es selbstverständlich denkbar, beispielsweise über ein Stirnrad 45 die Antriebsseite 21 a des Rotationskörpers 21 anzutreiben, welches beispielhaft in Fig. 5 dargestellt ist. Diese Antriebsmöglichkeit ist ebenfalls auf das Ausführungsbeispiel gemäß Fig. 1 und Fig. 2 übertragbar.

In den beschriebenen Ausführungsbeispielen weist die Steuerkontur 22 eine aktive Zone 22a und eine passive Zone 22b auf, wodurch ein Freilauf des Getriebes 20 erzielbar ist, bei dem das Sperrglied 10 in seiner jeweiligen Lage 1,2 verbleibt, während das Getriebe 20 aktiviert ist, insbesondere der Rotationskörper 21 sich bewegt. Die passiven Zonen 22b des Ausführungsbeispieles gemäß Fig. 1 und Fig. 2 haben einen konstanten Radius zur Achse 26. Die aktive Zone 22a weist einen sich vergrößernden oder verkleinernden Radius über den Drehwinkel des Rotationskörpers 21 auf. Im Ausführungsbeispiel gemäß den Fig. 3 bis Fig. 5 weist die Steuerkontur 22 in ihrer aktiven Zone 22a eine Steigung auf, wobei in der passiven Zone 22b die Steuerkontur 22 steigungslos ausgeführt ist. Während nun der Rotationskörper 21 über den Motor 40 in Rotation gebracht wird, erfolgt bezogen auf alle beschriebenen Ausführungsbeispiele eine Bewegung des Zwischenelementes 23 entlang der bogenförmigen Kurve 24, wenn das Zwischenelemente 23 sich in der aktiven Zone 22a befindet. Am Anfang und am Ende der Bewegung des Rotationskörpers 21 befindet sich das Zwischenelement 23 in der passiven Zone 22b des Rotationskörpers 21, so dass keine Kraft zur Bewegung des Sperrgliedes 10 in seine jeweilige Lage 1,2 ausgeübt wird.

Um besonders große Kräfte auf das Sperrglied 10, insbesondere während der Bewegung des Sperrgliedes 10 aus der Verriegelungslage 1 in die Entriegelungslage 2 einzuleiten, sind in der Verriegelungslage 1 des Sperrgliedes 10 der erste und der zweite Hebel 31, 32 in einen stumpfen Winkel α zueinander ausgerichtet, wobei der Winkel α während der Bewegung des Sperrgliedes 10 in die Entriegelungslage 2 sich verringert. Über diese Kniehebelkonstruktion können besonders hohe Kräfte am Bewegungsanfang am Sperrglied 10 ausgeübt werden.

Im ersten Ausführungsbeispiel gemäß Fig. 1 und Fig. 2 ist eine Arretierungseinheit 3 innerhalb des Gehäuses 43 vorgesehen, die das Sperrglied 10 in seiner Entriegelungslage 2 sichert, so dass nicht ungewollt während des Betriebes des Kraftfahrzeuges das Sperrglied 10 in die Verriegelungslage 1 gelangen kann.

Wie in den dargestellten Ausführungsbeispielen verdeutlicht ist, wirkt auf das freie Ende des zweiten Hebels 32 ein Federelement 11, das innerhalb des Sperrgliedes 10 angeordnet ist, falls beim Verriegelungsvorgang das Sperrglied 10 nicht in die Nut 46 der Lenksäule 41 verfahren kann (welches nicht explizit dargestellt ist), da beispielsweise der Zahn der Lenksäule 41 unmittelbar an der Öffnung 47 sich befindet. In dieser Situation wird das Federelement 11 durch den heruntergefahrenen zweiten Hebel 32 zusammengedrückt. Diese konstruktive Maßnahme verhindert, dass bei einer oben genannten Fehlstellung der Lenksäule 41 eine Störung, ein Bruch, etc. am Sperrglied 10, an der Lenksäule 41 und/oder an einem Bauteil des Getriebes 20 entsteht. Bei der vorliegenden Ausführungsform ist das Sperrglied 10 am oberen Bereich hülsenartig ausgeführt, in das der zweite Hebel 32 gelenkartig eingreift. Ferner weist das Sperrglied 10 ein Langloch 48 auf, in das ein Stift des zweiten Hebels 32 hineinragt und zumindest bei einer Fehlstellung der Lenksäule 41 entlang dieses Langloches 48 sich bewegt.

Erfolgt eine Zurückbewegung des Sperrgliedes 10 von der Entriegelungslage 2 in die Verriegelungslage 1 wird der elektrische Motor 40 in einer entgegen gesetzten Drehrichtung betrieben, so dass eine analoge Bewegung der Hebelanordnung 30 an der Steuerkontur 22, die für den Entriegelungsvorgang bereits beschrieben ist, erfolgt.

Gemäß Fig. 1 und Fig. 2 wird der Drehweg und der Drehwinkel des Rotationskörpers 21 erfasst und überwacht. Dieses erfolgt über einen Nocken 27, der am Randbereich des Rotationskörpers 21 angeordnet ist und mechanisch abgetastet wird. Alternativ kann der Randbereich, bezogen auf alle Ausführungsbeispiele dieser Erfindung, auch gitterartig ausgeführt sein, d. h. dass der Randbereich einer Verzahnung ähnelt, die beispielsweise mit einer Sensoreinheit zusammenwirkt, wodurch eine photoelektrische Ermittlung der genauen Position, Geschwindigkeit, etc. des Rotationskörpers 21 erzielbar ist. Alternativ kann eine Positionsermittlung des Rotationskörpers 21 über Magnetfeldsensoren oder Lichtschranken erfolgen. Ferner bietet es sich an, derartige Sensoren ebenfalls zur Positionserfassung des Sperrgliedes 10, der Hebelanordnung 20 sowie des Zwischenelementes 23 vorzusehen.

### Bezugszeichenliste

- 1: Verriegelungslage
- 2: Entriegelungslage
- 3: Arretierungseinheit

- 10: Sperrglied
- 11: Federelement

- 20: Getriebe
- 21: Rotationskörper
- 21 a: Antriebsseite
- 21 b: Abtriebsseite
- 22: Steuerkontur
- 22a: aktive Zone der Steuerkontur
- 22b: passive Zone der Steuerkontur
- 23: Zwischenelement
- 24: bogenförmige Kurve
- 25a: Stirnfläche
- 25b: Mantelfläche
- 26: Achse
- 27: Nocken

- 30: Hebelanordnung
- 31: erster Hebel
- 32: zweiter Hebel

- 40: Motor
- 41: Lenksäule, funktionswesentliches Bauteil
- 42: Lagerstelle
- 43: Gehäuse
- 44: Schneckenrad
- 45: Stirnrad
- 46: Nut
- 47: Öffnung
- 48: Langloch

## Patentansprüche

1. Vorrichtung zur Ansteuerung eines Sperrgliedes (10) eines funktionswesentlichen Bauteils (41), insbesondere einer Lenksäule (41) oder eines Gangschalthebels eines Kraftfahrzeuges, mit
einem Getriebe (20), das einen Rotationskörper (21) mit einer Steuerkontur (22) aufweist, mit der das Sperrglied (10) in mechanischer Wirkverbindung steht, das in eine Verriegelungslage (1) und in eine Entriegelungslage (2) und umgekehrt bewegbar ist, wobei
in der Verriegelungslage (1) das Sperrglied (10) am funktionswesentlichen Bauteil (41) eingreift,
in der Entriegelungslage (2) das Sperrglied (10) losgelöst vom funktionswesentlichen Bauteil (41) ist, wobei
zwischen dem Rotationskörper (21) und dem Sperrglied (10) eine schwenkbare, Hebelanordnung (30) angeordnet ist,
**dadurch gekennzeichnet, dass** die Hebelanordnung (30) über ein Zwischenelement (23) an der Steuerkontur (22) derart zwangsgeführt ist, dass während der Bewegung des Sperrgliedes (10) in seine jeweilige Lage (1, 2) das Zwischenelement (23) sich auf einer bogenförmigen Kurve (24) verschiebt, wodurch hohe Kräfte auf das Sperrglied (10) einbringbar sind, und **dass** die Hebelanordnung (30) mehrteilig ist.

2. Vorrichtung nach Anspruch 1,
**dadurch gekennzeichnet,**
**dass** die Hebelanordnung (30) einen ersten (31) und einen zweiten Hebel (32) aufweist, wobei der erste Hebel (31) an einer festen Lagerstelle (42) drehbar gelagert ist und der zweite Hebel (32) gelenkartig mit dem ersten Hebel (31) verbunden ist und an seinem freien Ende auf das Sperrglied (10) wirkt.

3. Vorrichtung nach Anspruch 1 oder 2,
**dadurch gekennzeichnet,**
**dass** die Steuerkontur (22) als Spiralnut ausgebildet ist.

4. Vorrichtung nach einem der vorhergehenden Ansprüche,
**dadurch gekennzeichnet,**
**dass** das Zwischenelement (23) am Gelenkpunkt des ersten (31) und des zweiten Hebels (32) liegt.

5. Vorrichtung nach einem der vorhergehenden Ansprüche,
**dadurch gekennzeichnet,**
**dass** der Rotationskörper (21) als Scheibenelement ausgebildet ist, das mit einer Stirnfläche (25a) ausgeführt ist, auf der die Steuerkontur (22) ausgebildet ist.

6. Vorrichtung nach einem der vorhergehenden Ansprüche,
**dadurch gekennzeichnet,**
**dass** das Getriebe (20) durch ein Gehäuse (43) umfasst ist, wobei das Gehäuse (43) eine Öffnung (47) aufweist, durch die das Sperrglied (10) zumindest in der Verriegelungslage (1) hindurchragt.

7. Vorrichtung nach einem der vorhergehenden Ansprüche,
**dadurch gekennzeichnet,**
**dass** der Rotationskörper (21) eine Antriebsseite (21 a) und eine Abtriebsseite (21 b) aufweist, wobei ein Elektromotor (40) an der Antriebsseite (21a) angreift und die Abtriebsseite (21 b) mit der Hebelanordnung (30) gekoppelt ist.

8. Vorrichtung nach Anspruch 7,
**dadurch gekennzeichnet,**
**dass** der Elektromotor (40) mit einem Schneckenrad (44) oder einem Stirnrad (45) auf die Antriebsseite (21 a) wirkt.

9. Vorrichtung nach einem der vorhergehenden Ansprüche,
**dadurch gekennzeichnet,**
**dass** der Rotationskörper (21) mit einer Mantelfläche (25b) ausgebildet ist, auf der die Steuerkontur (22) ausgebildet ist.

10. Vorrichtung nach einem der vorhergehenden Ansprüche,
**dadurch gekennzeichnet,**
**dass** in der Verriegelungslage (1) des Sperrgliedes (10) der erste und der zweite Hebel (31,32) in einem stumpfen Winkel (α) zueinander ausgerichtet sind, wobei der Winkel (α) während der Bewegung des Sperrgliedes (10) in die Entriegelungslage (2) sich verringert.

11. Vorrichtung nach einem der vorhergehenden Ansprüche,
**dadurch gekennzeichnet,**
**dass** die Steuerkontur (22) eine aktive Zone (22a) und eine passive Zone (22b) aufweist, wodurch ein Freilauf des Getriebes (20) erzielbar ist, bei dem das Sperrglied (10) in seiner jeweiligen Lage (1,2) verbleibt, während das Getriebe (20) aktiviert ist, insbesondere der Rotationskörper (21) sich bewegt.

12. Vorrichtung nach einem der vorhergehenden Ansprüche,
**dadurch gekennzeichnet,**
**dass** auf das freie Ende des zweiten Hebels (32) ein Federelement (11) wirkt, das innerhalb des Sperrgliedes (10) angeordnet ist.

13. Vorrichtung nach einem der vorhergehenden Ansprüche,
**dadurch gekennzeichnet,**
**dass** eine Arretierungseinheit (3) innerhalb des Gehäuses (43) vorgesehen ist, die das Sperrglied (10) in seiner Entriegelungslage (2) sichert.

## Claims

1. An apparatus for controlling a blocking member (10) of a functionally essential component (41), in particular a steering column (41) or a gear-shift lever of a motor vehicle, with
a transmission (20) which has a rotating body (21) with a control contour (22) to which the blocking member (10) is operatively connected in a mechanical manner, the blocking member (10) being movable into a locking position (1) and into an unlocking position (2) and *vice versa,* wherein
in the locking position (1) the blocking member (10) engages on the functionally essential component (41),
in the unlocking position (2) the blocking member (10) is released from the functionally essential component (41), wherein
a pivotable lever arrangement (30) is arranged between the rotating body (21) and the blocking member (10),
**characterized in that** the lever arrangement (30) is forcibly guided on the control contour (22) by way of an intermediate element (23) in such a way that during the movement of the blocking member (10) into its respective position (1, 2) the intermediate element (23) is displaced along an arcuate curve (24), as a result of which substantial forces are capable of being applied to the blocking member (10), and the lever arrangement (30) is in a multiplicity of parts.

2. An apparatus according to Claim 1, **characterized in that** the lever arrangement (30) has a first lever (31) and a second lever (32), wherein the first lever (31) is mounted on a fixed bearing point (42) in a rotatable manner and the second lever (32) is connected to the first lever (31) in an articulated manner and acts upon the blocking member (10) at its free end.

3. An apparatus according to Claim 1 or 2, **characterized in that** the control contour (22) is designed in the form of a spiral groove.

4. An apparatus according to any one of the preceding Claims, **characterized in that** the intermediate element (23) is situated at the articulation point of the first lever (31) and the second lever (32).

5. An apparatus according to any one of the preceding Claims, **characterized in that** the rotating body (21) is designed in the form of a disc element which is constructed with an end face (25a) on which the control contour (22) is formed.

6. An apparatus according to any one of the preceding Claims, **characterized in that** the transmission (20) is embraced by a housing (43), wherein the housing (43) has an opening (47) through which the blocking member (10) projects at least in the locking position (1).

7. An apparatus according to any one of the preceding Claims, **characterized in that** the rotating body (21) has a drive side (21a) and a take-off side (21b), wherein an electric motor (40) engages on the drive side (21a) and the take-off side (21b) is coupled to the lever arrangement (30).

8. An apparatus according to Claim 7, **characterized in that** the electric motor (40) acts with a worm gear (44) or a spur gear (45) upon the drive side (21 a).

9. An apparatus according to any one of the preceding Claims, **characterized in that** the rotating body (21) is formed with an outer face (25b) on which the control contour (22) is formed.

10. An apparatus according to any one of the preceding Claims, **characterized in that** in the locking position (1) of the blocking member (10) the first and the second levers (31, 32) are orientated at an obtuse angle (α) to each other, wherein the angle (α) is reduced during the movement of the blocking member (10) into the unlocking position (2).

11. An apparatus according to any one of the preceding Claims, **characterized in that** the control contour (22) has an active zone (22a) and a passive zone (22b), as a result of which a freewheel of the transmission (20) is capable of being achieved, in which the blocking member (10) remains in its respective position (1, 2) whilst the transmission (20) is activated, and in particular the rotating body (21) moves.

12. An apparatus according to any ane of the preceding Claims, **characterized in that** a spring element (11), which is arranged inside the blocking member (10), acts upon the free end of the second lever (32).

13. An apparatus according to any one of the preceding Claims, **characterized in that** a locking unit (3), which secures the blocking member (10) in its unlocking position (2), is provided inside the housing (43).

## Revendications

1. Dispositif d'activation d'un organe de blocage (10) d'un(e) élément ou partie structurelle (41) fonctionnellement essentiel(le), notamment d'une colonne de direction (41) ou d'un levier de changement de vitesses d'un véhicule automobile, comprenant une transmission (20) qui présente un corps rotatif (21) pourvu d'un profil de commande (22) avec lequel ledit organe de blocage (10) est en liaison mécanique opérante et peut être amené à une position de verrouillage (1) et à une position de déverrouillage (2), et inversement,
ledit organe de blocage (10) étant en prise avec la partie structurelle (41) fonctionnellement essentielle, dans la position de verrouillage (1), et
ledit organe de blocage (10) étant dissocié d'avec ladite partie structurelle (41) fonctionnellement essentielle, dans la position de déverrouillage (2), sachant qu'un ensemble (30) de leviers, apte à pivoter, est interposé entre le corps rotatif (21) et l'organe de blocage (10),
**caractérisé par le fait**
**que** ledit ensemble (30) de leviers est guidé à force sur le profil de commande (22) au moyen d'un élément intermédiaire (23), de telle sorte que ledit élément intermédiaire (23) se déplace sur une ligne courbe (24), au cours du mouvement de l'organe de blocage (10) vers sa position considérée (1, 2), ce qui permet d'appliquer de grandes forces audit organe de blocage (10) ; et par le fait
**que** ledit ensemble (30) de leviers est composé de plusieurs parties.

2. Dispositif selon la revendication 1,
**caractérisé par le fait**
**que** l'ensemble (30) de leviers comprend des premier (31) et second (32) leviers, ledit premier levier (31) étant monté à rotation dans une zone fixe de portée (42), et ledit second levier (32) étant relié audit premier levier (31) à la manière d'une articulation, et agissant sur l'organe de blocage (10) par son extrémité libre.

3. Dispositif selon la revendication 1 ou 2,
**caractérisé par le fait**
**que** le profil de commande (22) est configuré en une rainure hélicoïdale ou en spirale.

4. Dispositif selon l'une des revendications précédentes, -
**caractérisé par le fait**
**que** l'élément intermédiaire (23) se trouve au point d'articulation des premier (31) et second (32) leviers.

5. Dispositif selon l'une des revendications précédentes,
**caractérisé par le fait**
**que** le corps rotatif (21) est réalisé sous la forme d'un élément discoïdal muni d'une face frontale (25a) sur laquelle le profil de commande (22) est ménagé.

6. Dispositif selon l'une des revendications précédentes,
**caractérisé par le fait**
**que** la transmission (20) est entourée d'un carter (43), ledit carter (43) présentant un orifice (47) que l'organe de blocage (10) franchit au moins dans la position de verrouillage (1).

7. Dispositif selon l'une des revendications précédentes,
**caractérisé par le fait**
**que** le corps rotatif (21) offre un côté menant (21a) et un côté mené (21b), un moteur électrique (40) venant en prise avec ledit côté menant (21a), et ledit côté mené (21b) étant couplé à l'ensemble (30) de leviers.

8. Dispositif selon la revendication 7,
**caractérisé par le fait**
**que** le moteur électrique (40) agit sur le côté menant (21a) par une roue (44) à denture hélicoïdale, ou par une roue (45) à denture droite.

9. Dispositif selon l'une des revendications précédentes,
**caractérisé par le fait**
**que** le corps rotatif (21) est doté d'une surface périphérique (25b) sur laquelle le profil de commande (22) est façonné.

10. Dispositif selon l'une des revendications précédentes,
**caractérisé par le fait**
**que** les premier et second leviers (31, 32) sont mutuellement orientés suivant un angle obtus (α) dans la position de verrouillage (1) de l'organe de blocage (10), ledit angle (α) s'amenuisant lors du mouvement dudit organe de blocage (10) vers la position de déverrouillage (2).

11. Dispositif selon l'une des revendications précédentes,
**caractérisé par le fait**
**que** le profil de commande (22) comprend une zone active (22a) et une zone passive (22b), permettant ainsi d'obtenir un fonctionnement en roue libre de la transmission (20) au cours duquel l'organe de blocage (10) demeure dans sa position considérées (1, 2) tandis que ladite transmission (20) est activée, et que le corps rotatif (21) effectue notamment un mouvement.

12. Dispositif selon l'une des revendications précédentes,
**caractérisé par le fait**
**qu'**un élément élastique (11), logé à l'intérieur de l'organe de blocage (10), agit sur l'extrémité libre du second levier (32).

13. Dispositif selon l'une des revendications précédentes,
**caractérisé par le fait**
**qu'**une unité d'arrêt (3), prévu à l'intérieur du carter (43), arrête l'organe de blocage (10) dans sa position de déverrouillage (2).
